# EUROPÄISCHE PATENTSCHRIFT

(11) **EP 0 596 196 B1**
(45) Veröffentlichungstag und Bekanntmachung des Hinweises auf die Patenterteilung: **08.10.1997**
(21) Anmeldenummer: 93109576.4
(22) Anmeldetag: 16.06.1993
(51) Int. Cl.: F16J 15/32, F16C 33/76

(54) **Dichtungsanordnung**
Sealing arrangement
Agencement d'étanchéité

(30) Priorität: 04.11.1992 DE 4237190
(43) Veröffentlichungstag der Anmeldung: 11.05.1994
(73) Patentinhaber: Firma Carl Freudenberg, 69469 Weinheim (DE)
(72) Erfinder: Freiwald, Gerhard, D-6944 Hemsbach (DE); Klein, Norbert, D-6944 Hemsbach (DE)

(56) Entgegenhaltungen:
- DE-A- 4 209 320
- DE-U- 1 861 326
- DE-U- 1 981 048
- FR-A- 2 254 241
- FR-A- 2 567 981
- US-A- 3 961 829

## Beschreibung

Die Erfindung betrifft eine Dichtungsanordnung zur Abdichtung einer durch eine Gehäusewandung geführten Welle, umfassend einen Radialwellendichtring , der die abzudichtende Welle mit zumindest einer Dichtlippe aus elastomerem Werkstoff unter radialer Vorspannung umfangsseitig dichtend umschließt, wobei die Dichtlippe an einem radial nach innen weisenden ersten Schenkel eines im wesentlichen L-förmigen ersten Versteifungsringes festgelegt ist, wobei sich der zweite Schenkel in axialer Richtung erstreckt und den Außenring eines Wälzlagers zumindest teilweise überdeckt und anliegend berührt und wobei der zweite Schenkel zumindest auf der der Gehäusewandung zugewandten Seite von elastomerem Werkstoff ummantelt und unter radialer Vorspannung in der Gehäusewandung festlegbar ist.

Eine solche Dichtungsanordnung ist aus dem DE-GM 19 17 623 bekannt. Die Dichtungsanordnung ist als Toleranzring zur Befestigung von Wälzlagern in Aufnahmegehäusen ausgebildet. Besteht beispielsweise das Aufnahmegehäuse aus Leichtmetall und der Wälzlagerring aus Stahl, wird durch diese Dichtungsanordnung die sich verändernde Toleranz zwischen Aufnahmegehäue und Lagerring über das Elastomer ausgeglichen. Die Dimensionierung und Auswahl des Elastomers erfolgt dabei in Abhängigkeit von den auszugleichenden Toleranzen. Insbesondere bei Wellen, die keinen optimalen Rundlauf aufweisen, beispielsweise die Abtriebswellen von einem Kraftfahrzeuggetriebe, treten bei der Verwendung der vorbekannten Dichtungsanordnung Probleme auf. Die Abdichtung von schwingenden und/oder keinen optimalen Rundlauf aufweisenden Wellen ist daher wenig befriedigend.

Der Toleranzring liegt mit seinem gummielastischen Überzug unter radialer Vorspannung in einer Bohrung des Gehäuses an, wobei die Bohrung zur sicheren axialen Festlegung des Toleranzringes eine Profilierung aufweist, die mit dem Überzug in Eingriff ist. Eine derart ausgestaltete Bohrung ist in fertigungstechnischer und wirtschaftlicher Hinsicht nachteilig.

Der Erfindung liegt die Aufgabe zugrunde, eine Dichtungsanordnung der vorbekannten Art derart weiterzuentwickeln, daß sich eine verbesserte Abdichtung während einer langen Gebrauchsdauer ergibt und auftretende Schwingungen der rotierenden Welle isoliert/gedämpft werden können. Eine axiale Lageveränderung der Dichtungsanordnung relativ zum Gehäuse soll zuverlässig vermieden werden.

Diese Aufgabe wird erfindungsgemäß mit den Merkmalen von Anspruch 1 gelöst. Auf vorteilhafte Ausgestaltungen nehmen die Unteransprüche Bezug.

Zur Verbesserung der Gebrauchseigenschaften der Dichtungsanordnung während einer langen Gebrauchsdauer, für eine wirkungsvolle Schwingungsisolierung/Schwingungsdämpfung und eine einwandfreie räumliche Zuordnung der Dichtungsanordnung innerhalb des Gehäuses ist es vorgesehen, daß die Ummantelung auf der der Gehäusewandung zugewandten Seite in einem axialen Teilbereich von einem zweiten Versteifungsring aus zähhartem Werkstoff umschlossen ist, daß der zweite Versteifungsring die Gehäusewandung während der bestimmungsgemäßen Verwendung unter radialer Vorspannung zumindest teilweise anliegend berührt und daß die Ummantelung den zweiten Versteifungsring außerhalb des axialen Teilbereichs herstellungsbedingt in radialer Richtung überragt. Der elastomere Werkstoff der Ummantelung sowie die Dicke hängen von den jeweiligen Gegebenheiten des Anwendungsfalles ab. Bei Unwuchten der abzudichtenden Welle ergibt sich eine erhebliche Geräuschreduzierung akustisch störender Schwingungen und einer Fortpflanzung der unerwünschten Geräusche wird zuverlässig vorgebeugt. Der zweite Versteifungsring, der beispielsweise aus einem metallischen Werkstoff bestehen kann, ermöglicht durch die unmittelbare Berührung der Gehäusewandung unter radialer Vorspannung eine stabile Festlegung der Dichtungsanordnung. Axiale Verlagerungen der gesamten Dichtungsanordnung relativ zu der Gehäusewandung können durch diese Ausgestaltung auch dann verhindert werden, wenn die abzudichtende Welle während der Rotation in radialer Richtung ausgelenkt wird und/oder Wärmedehnungen aufweist.

Die Dichtungsanordnung wird in die Bohrung der Gehäusewandung eingepreßt und in dieser zuverlässig reibschlüssig gehalten. Für eine einwandfreie Abdichtung des Gehäuses ist es vorgesehen, daß die Ummantelung des ersten Versteifungsrings den zweiten Versteifungsring in radialer Richtung außerhalb des axialen Teilbereichs herstellungsbedingt in radialer Richtung überragt und dadurch unter elastischer Vorspannung mit der abzudichtenden Gehäusewandung in Eingriff bringbar ist. Bei einer derartigen Ausgestaltung ist von hervorzuhebender Bedeutung, daß eine ausgezeichnete Führung der abzudichtenden Welle durch die Abstützung des Wälzlagers gegeben ist, gleichzeitig die auftretenden Schwingungen isoliert/gedämpft werden und eine hervorragende räumliche Zuordnung der Dichtungsanordnung zwischen der Wandung und Welle auch bei einer langen Gebrauchsdauer gegeben ist. Eine Übertragung von Schwingungsgeräuschen an die Umgebung ist minimiert.

Der zweite Versteifungsring und die Ummantelung können adhäsiv verbunden sein. Beispielsweise können die beiden Bauteile miteinander vulkanisiert oder durch einen Kleber miteinander verbunden sein. Eine derartige Festlegung beider Teile aneinander ist außerordentlich zuverlässig und bleibt auch während einer langen Gebrauchsdauer erhalten. In fertigungstechnischer Hinsicht und im Hinblick auf eine einfache Montage ist es vorteilhaft, wenn der zweite Versteifungsring ein L-förmiges Profil aufweist und mit einem in radialer Richtung vorstehenden Flansch an einer Radialfläche der Gehäusewandung anlegbar ist. Insbesondere wenn der zweite Versteifungsring an der Ummantelung anvulkanisiert ist, ergibt sich eine vereinfachte Fertigung. Auch die Montage und die genaue Positionierung der Dichtungsanordnung im Spalt zwischen dem Gehäuse und der Welle wird durch den in radialer Richtung vorstehenden Flansch vereinfacht. Die Dichtungsanordnung kann in axialer Richtung in den Spalt zwischen Gehäuse und Welle solange eingeschoben werden, bis sich der Flansch an die Wandung des Gehäuses anlegt.

In Abhängigkeit von den jeweiligen Gegebenheiten des Anwendungsfalles kann der Bereich der radial nach außen vorstehenden Begrenzung des Flansches mit Elastomer umschlossen sein, das einen Bestandteil der Ummantelung bilden kann und auf der der Wandung zugewandten Seite eine in axialer Richtung vorstehende Axialdichtlippe aufweist. Eine Leckage zwischen der Dichtungsanordnung und dem die Dichtungsanordnung umschließenden Gehäuse ist durch diese Ausgestaltung ausgeschlossen. Die in radialer Richtung vorstehenden Dichtrippen der Ummantelung und/oder die Axialdichtlippe halten die abzudichtende Flüssigkeit sicher im abzudichtenden Raum zurück.

Der zweite Versteifungsring und der erste Versteifungsring umschließen einander bevorzugt konzentrisch, wobei in radialer Richtung zwischen den beiden Versteifungsringen eine Ummantelung mit einer Schichtdicke von bevorzugt 0,7 bis 3 mm angeordnet ist. Es hat sich gezeigt, daß besonders gute Gebrauchseigenschaften bezüglich der Schwingungsisolierung/Schwingungsdämpfung und der Minimierung der Geräuschübertragung erzielt werden können, wenn die Schichtdicke in diesem Bereich, bevorzugt im Bereich von 0,8 mm bis 2 mm liegt. Für die Mehrzahl der Anwendungsfälle ist eine derartige Schichtdicke gut geeignet und stellt einen guten Kompromiß zwischen geringer Ausdehnung der Dichtungsanordnung in radialer Richtung und effizienter Schwingungsisolierung/Schwingungsdämpfung dar.

Gemäß einer vorteilhaften Ausgestaltung kann der zweite Schenkel des ersten Versteifungsringes ein gekröpftes Profil aufweisen, wobei der in seinem Durchmesser relativ erweiterte Teilbereich des zweiten Schenkels den Außenring des Wälzlagers teilweise umgreift. Der in seinem Durchmesser relativ verkleinerte Teilbereich des zweiten Schenkels kann unter radialer Zwischenschaltung der Ummantelung innerhalb des zweiten Versteifungsringes angeordnet sein. Hierbei ist von Vorteil, daß die Dichtungsanordnung besonders geringe Abmessungen in radialer Richtung aufweist. Neben den geringen Abmessungen in radialer Richtung sind außerdem annähernd gleichbleibende Wandstärken der Ummantelung und des ersten Versteifungsrings gewährleistet, so daß unerwünschte Materialanhäufungen vermieden werden. Außerdem wird der relativ zu seinem Durchmesser erweiterte Teilbereich zur verbesserten Abstützung des Außenringes des Wälzlagers in axialer Richtung genutzt, so daß eine genaue Positionierung des Wälzlagers innerhalb der Dichtungsanordnung bewirkt wird.

Die Ummantelung kann auf der der Gehäusewandung zugewandten Seite mindestens zwei umlaufende Dichtrippen aufweisen, die mit axialem Abstand zueinander benachbart sind. Die Dichtrippen wirken in diesem Fall als statische Abdichtung, wobei in Abhängigkeit von den abzudichtenden Drücken und der Viskosität des abzudichtenden Mediums mehrere Dichtrippen in axialer Richtung hintereinander angeordnet sein können, um ein Labyrinth zu bilden. Eine gute statische Abdichtung wird dadurch erreicht.

Die Welle kann von einer Hilfsdichtlippe dichtend umschlossen sein, die der Dichtlippe auf der dem abzudichtenden Medium abgewandten Seite in axialer Richtung benachbart zugeordnet ist, wobei die Hilfsdichtlippe, die Dichtlippe und die Welle einen Hohlraum begrenzen. Zur Verbesserung der Gebrauchseigenschaften während einer langen Gebrauchsdauer kann der gebildete Hohlraum während der bestimmungsgemäßen Verwendung mit Fett gefüllt sein. Die als Vorschaltdichtung wirkende Hilfsdichtlippe hält dadurch in Verbindung mit dem fettgefüllten Hohlraum gebrauchsdauerverringernde Verunreinigungen von der Dichtlippe fern. Von hervorzuhebender Bedeutung ist, daß die erfindungsgemäße Dichtungsanordnung auch unter extremen Einsatzbedingungen zur Anwendung gelangen kann.

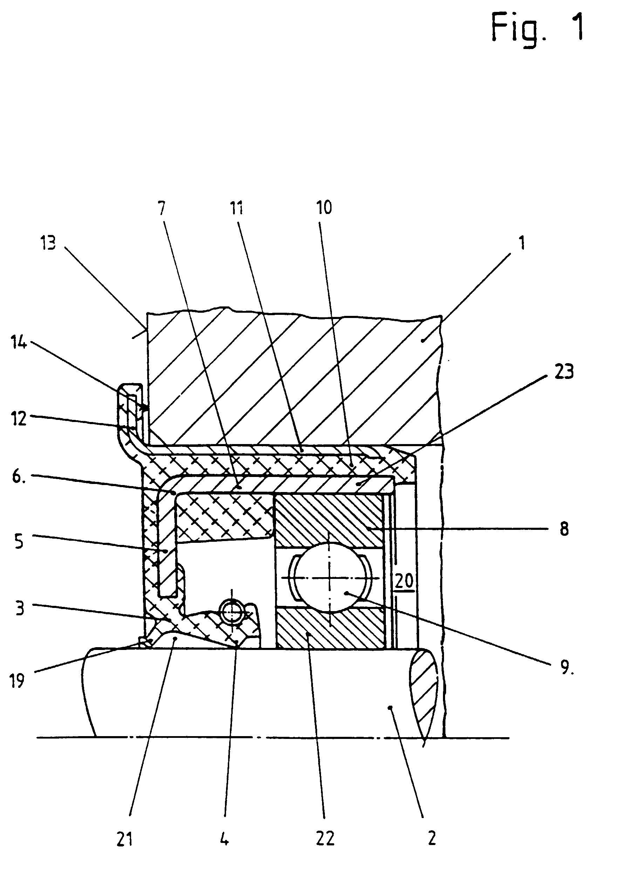

Die erfindungsgemäße Dichtungsanordnung wird nachfolgend anhand der als Anlage beigefügten Figuren 1, 2 und 3, die Ausführungsbeispiele darstellen, weiter erläutert.

In Fig. 1 ist eine Dichtungsanordnung mit in axialer Richtung geradlinig verlaufendem zweiten Schenkel gezeigt und ein Flansch, der im Bereich seiner radialen Begrenzung mit elastomerem Werkstoff ummantelt ist, wobei der elastomere Werkstoff einstückig mit der Ummantelung ausgebildet ist.

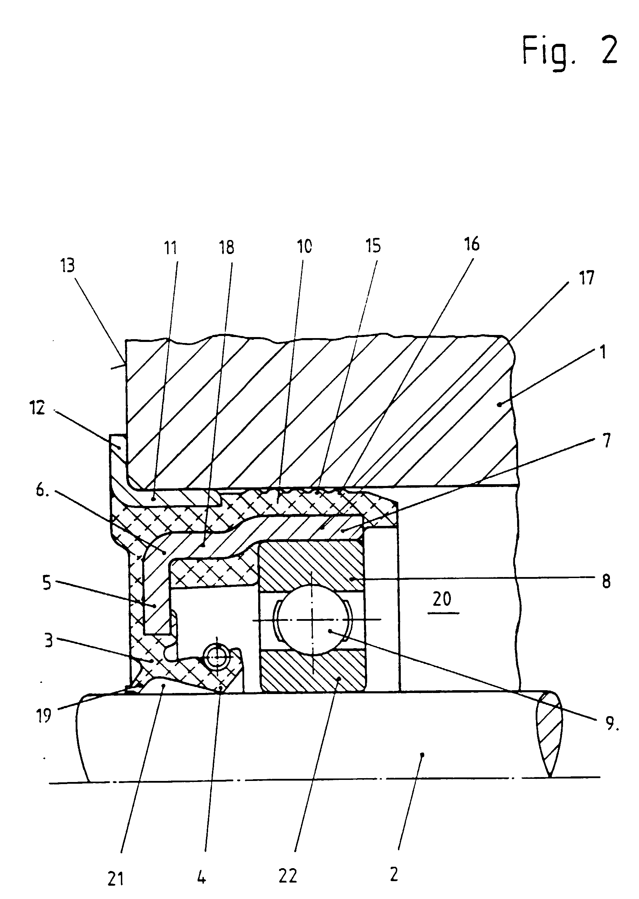

In Fig. 2 ist eine Dichtungsanordnung gezeigt, ähnlich der Dichtungsanordnung aus Fig. 1, wobei der zweite Schenkel gekröpft gestaltet ist und der zweite Versteifungsring im Bereich seiner radialen Begrenzung keine Ummantelung aufweist. Die Dichtungsanordnung gemäß Fig. 2 weist in radialer Richtung, verglichen mit der Dichtungsanordnung aus Fig. 1, geringere Abmessungen auf.

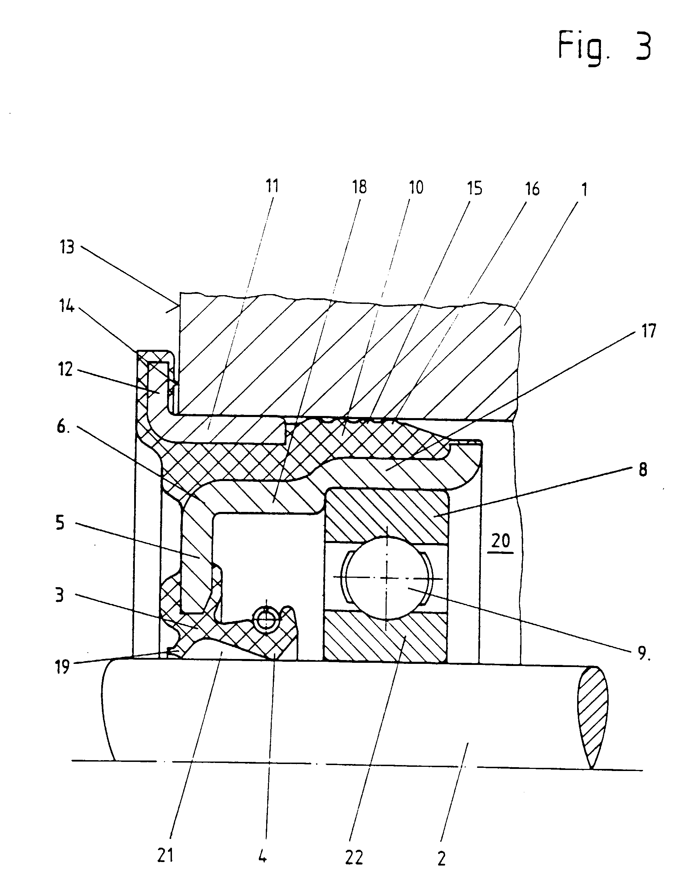

In Fig. 3 ist eine Dichtungsanordnung dargestellt, die Merkmale aus den Dichtungsanordnungen gemäß der Fig. 1 und 2 enthält. Der in radialer Richtung verlaufende Flansch ist im Bereich seiner radialen Begrenzung mit elastomerem Werkstoff ummantelt, wobei der elastomere Werkstoff eine in Richtung der Gehäusewandung vorspringende Dichtlippe aufweist. Außerdem ist der zweite Schenkel gekröpft ausgebildet.

In den Fig. 1, 2 und 3 ist jeweils ein Ausführungsbeispiel einer Dichtungsanordnung zur Abdichtung einer durch eine Gehäusewandung 1 geführten Welle 2 gezeigt. Die Dichtungsanordnung besteht im wesentlichen aus einem Radialwellendichtring 3 und einem integrierten Wälzlager 9, wobei der Radialwellendichtring 3 die relativ zur Gehäusewandung 1 rotierende Welle 2 dynamisch abdichtet. In den Fig. 2 und 3 erfolgt die statische Abdichtung im Bereich der Gehäusewandung 1 über die Dichtrippen 15, 16. In sämtlichen hier dargestellten Ausführungsbeispielen wird die dynamische Abdichtung der Welle 2 durch die Dichtlippe 4 und eine Hilfsdichtlippe 19 bewirkt, die die abzudichtende Welle 2 umfangsseitig dichtend berühren. Die Hilfsdichtlippe 19 ist der Dichtlippe 4 in axialem Abstand benachbart zugeordnet, wodurch ein Hohlraum 21 begrenzt wird, der zum Schutz der Dichtlippe 4 mit Fett befüllbar. Der erste Versteifungsring 6 weist in beiden Ausführungsbeispielen einen sich in axialer Richtung erstreckenden zweiten Schenkel 7 auf, der sich in axialer Richtung erstreckt und den Außenring 8 des Wälzlagers 9 in axialer Richtung überdeckt und anliegend berührt. Das Wälzlager 9 ist einerseits mit dem Innenring 22 auf der Welle 2 und andererseits mit seinem Außenring 8 im zweiten Schenkel 7 des ersten Versteifungsringes 6 gehalten. Die Ummantelung 10 ist derart ausgebildet, daß sich während der bestimmungsgemäßen Verwendung der Dichtungsanordnung ein Ausgleich z.B. wärmebedingter Toleranzen ergibt. Gleichzeitig bewirkt die erfindungsgemäße Dichtungsanordnung eine Schwingungsisolierung/Schwingungsdämpfung der auftretenden Schwingungen und eine Geräuschreduzierung während des Betriebs. Der zweite Versteifungsring 11 ist zur zuverlässigen räumlichen Fixierung der Dichtungsanordnung aus einem zähharten Werkstoff gebildet und berührt im Bereich seines Außenumfangs die Begrenzungswandung der Bohrung innerhalb der Gehäusewandung 1 unter radialer Vorspannung. Eine Abdichtung in diesem Bereich erfolgt über die Ummantelung, die den zweiten Versteifungsring außerhalb des axialen Teilbereichs herstellungsbedingt in radialer Richtung überragt.

In Fig. 1 ist der zweite Schenkel 7 des ersten Versteifungsringes 6 in axialer Richtung geradlinig ausgebildet, wobei der zweite Versteifungsring 11 mit dem ersten Versteifungsring 7 eine im wesentlichen übereinstimmende Erstreckung in axialer Richtung aufweist. Die Ummantelung 10 im Bereich der axialen Begrenzung 23 des zweiten Schenkels 7 überragt im herstellungsbedingten Zustand den zweiten Versteifungsring 11 in radialer Richtung geringfügig, so daß eine statische Abdichtung erfolgt, und so daß während der bestimmungsgemäßen Verwendung in diesem Bereich eine zuverlässige Abdichtung des abzudichtenden Mediums 20 innerhalb des abzudichtenden Raumes gewährleistet ist. Zusätzlich weist der in radialer Richtung nach außen vorstehende Flansch 12 im Bereich seiner radialen Begrenzung eine Ummantelung aus elastomerem Werkstoff auf, die in diesem Ausführungsbeispiel einstückig mit der Ummantelung 10 ausgebildet ist. Der zweite Versteifungsring 11 bewirkt eine zuverlässige, reibschlüssige Festlegung der Dichtungsanordnung innerhalb des Spaltes, der durch die Welle 2 und die Gehäusewandung 1 begrenzt ist.

Eine zusätzliche Sicherheit bezüglich der Abdichtung des Gehäuses wird durch die Axialdichtlippe 14 erreicht, die den in radialer Richtung vorstehenden Flansch 12 gegen die Radialfläche 13 abdichtet.

In Fig. 2 hat der zweite Schenkel 7 ein gekröpftes Profil, wobei der in seinem Durchmesser relativ erweiterte Teilbereich 17 des zweiten Schenkels 7 den Außenring 8 des Wälzlagers 9 in axialer Richtung überdeckt und anliegend berührt. Der in seinem Durchmesser relativ verkleinerte Teilbereich 18 des zweiten Schenkels 7 ist unter radialer Zwischenschaltung der Ummantelung 10 innerhalb des zweiten Versteifungsrings 11 angeordnet. Hierbei ist von hervorzuhebender Bedeutung, daß die Schichtdicke der Ummantelung 10 im wesentlichen gleichbleibend ist, wodurch unerwünschte Materialanhäufungen vermieden werden. Dies ist in fertigungstechnischer Hinsicht besonders günstig. Die reibschlüssige Verbindung zur Festlegung der Dichtungsanordnung innerhalb der Gehäusewandung 1 wird auch in diesem Ausführungsbeispiel über den zweiten Versteifungsring 11 erzielt. Dieser ist in axialer Richtung kürzer ausgebildet, als der zweite Versteifungsring 11 aus Fig. 1. Auch in Fig. 2 überragt die Ummantelung 10 den zweiten Versteifungsring 11 in radialer Richtung herstellungsbedingt nach außen, so daß eine zuverlässige Abdichtung des abzudichtenden Mediums 20 gewährleistet ist. Der Flansch 12, der einstückig mit dem zweiten Versteifungsring 11 ausgebildet ist, dient der exakten Positionierung der Dichtungsanordnung innerhalb der Gehäusewandung 1.

Im Ausführungsbeispiel der Dichtungsanordnung gemäß Fig. 3 sind die vorteilhaften Ausgestaltungen gemäß den Ausführungsbeispielen aus den Fig. 1 und 2 zusammengefaßt. Im Bereich des radial nach außen vorstehenden Flanschs 12 ist eine Ummantelung aus elastomerem Werkstoff vorgesehen, die durch die Axialdichtlippe 14 dichtend mit der Radialfläche 13 der Gehäusewandung 1 in Eingriff bringbar ist. Durch das gekröpfte Profil des zweiten Schenkels 7 weist die Dichtungsanordnung vergleichsweise geringe Abmessungen in radialer Richtung auf. Der zweite Versteifungsring 11 legt die Dichtungsanordnung auch in diesem Ausführungsbeispiel reibschlüssig innerhalb der Gehäusewandung 1 fest.

## Patentansprüche

1. Dichtungsanordnung zur Abdichtung einer durch eine Gehäusewandung (1) geführten Welle (2), umfassend einen Radialwellendichtring (3), der die abzudichtende Welle (2) mit zumindest einer Dichtlippe (4;19) aus elastomerem Werkstoff unter radialer Vorspannung umfangsseitig dichtend umschließt, wobei die Dichtlippe (4;19) an einem radial nach innen weisenden ersten Schenkel (5) eines im wesentlichen L-förmigen ersten Versteifungsringes (6) festgelegt ist, wobei sich der zweite Schenkel (7) in axialer Richtung erstreckt und den Außenring (8) eines Wälzlagers (9) zumindest teilweise überdeckt und anliegend berührt und wobei der zweite Schenkel (7) zumindest auf der der Gehäusewandung (1) zugewandten Seite von elastomerem Werkstoff ummantelt und unter radialer Vorspannung in der Gehäusewandung (1) festlegbar ist, dadurch gekennzeichnet, daß die Ummantelung (10) auf der der Gehäusewandung (1) Zugewandten Seite in einem axialen Teilbereich von einem zweiten Versteifungsring (11) aus zähhartem Werkstoff umschlossen ist, daß der zweite Versteifungsring (11) die Gehäusewandung (1) während der bestimmungsgemäßen Verwendung unter radialer Vorspannung zumindest teilweise anliegend berührt und daß die Ummantelung (10) den zweiten Versteifungsring (11) außerhalb des axialen Teilbereichs herstellungsbedingt in radialer Richtung überragt.

2. Dichtungsanordnung nach Anspruch 1, dadurch gekennzeichnet, daß der zweite Versteifungsring (11) und die Ummantelung (10) adhäsiv verbunden sind.

3. Dichtungsanordnung nach Anspruch 1 bis 2, dadurch gekennzeichnet, daß der zweite Versteifungsring (11) ein L-förmiges Profil aufweist und mit einem in radialer Richtung vorstehenden Flansch (12) an einer Radialfläche (13) der Gehäusewandung (1) anlegbar ist.

4. Dichtungsanordnung nach Anspruch 3, dadurch gekennzeichnet, daß der Flansch (12) zumindest im Bereich seiner radial nach außen vorstehenden Begrenzung von Elastomer umschlossen ist und auf der der Gehäusewandung (1) zugewandten Seite eine in axialer Richtung vorstehende Axialdichtlippe (14) aufweist.

5. Dichtungsanordnung nach Anspruch 1 bis 4, dadurch gekennzeichnet, daß der zweite Versteifungsring (11) den ersten Versteifungsring (6) konzentrisch umschließt.

6. Dichtungsanordnung nach Anspruch 1 bis 5, dadurch gekennzeichnet, daß in radialer Richtung zwischen dem ersten und dem zweiten Versteifungsring (6, 11) eine Ummantelung (10) mit einer Schichtdicke von 0,7 bis 3 mm angeordnet ist.

7. Dichtungsanordnung nach Anspruch 1 bis 6, dadurch gekennzeichnet, daß der zweite Schenkel (7) des ersten Versteifungsrings (6) ein gekröpftes Profil aufweist, daß der in seinem Durchmesser relativ erweiterte Teilbereich (17) des zweiten Schenkels (7) den Außenring (8) teilweise umgreift und daß der in seinem Durchmesser relativ verkleinerte Teilbereich (18) des zweiten Schenkels (7) unter radialer Zwischenschaltung der Ummantelung (10) innerhalb des zweiten Versteifungsrings (11) angeordnet ist.

8. Dichtungsanordnung nach Anspruch 1 bis 7, dadurch gekennzeichnet, daß die Ummantelung (10) auf der der Gehäusewandung (1) zugewandten Seite wenigstens zwei umlaufende Dichtrippen (15, 16) aufweist und daß die Dichtrippen (15, 16) mit axialem Abstand zueinander benachbart sind.

9. Dichtungsanordnung nach Anspruch 1, dadurch gekennzeichnet, daß die Welle (2) von einer Hilfsdichtlippe (19) dichtend umschlossen ist, die der Dichtlippe (4) auf der dem abzudichtenden Medium (20) abgewandten Seite in axialer Richtung benachbart zugeordnet ist und daß die Hilfsdichtlippe (19), die Dichtlippe (4) und die Welle (2) einen Hohlraum (21) begrenzen.

10. Dichtungsanordnung nach Anspruch 9, dadurch gekennzeichnet, daß der Hohlraum (21) während der bestimmungsgemäßen Verwendung mit Fett gefüllt ist.

## Claims

1. A sealing arrangement for sealing a shaft (2) which passes through a housing wall (1), comprising a radial shaft seal (3) which, in a sealing manner, circumferentially surrounds the shaft (2) to be sealed with at least one sealing lip (4; 19) of elastomer material under radial prestress, the sealing lip (4; 19) being fixed on a first limb (5), pointing radially inwards, of an essentially L-shaped first reinforcing ring (6), the second limb (7) extending in the axial direction and at least partially covering and closely touching the outer ring (8) of a rolling bearing (9), and the second limb (7) being sheathed by elastomer material at least on the side facing the housing wall (1), and it being possible for the said second limb to be fixed in the housing wall (1) under radial prestress, characterized in that, in an axial partial region, the sheathing (10) is surrounded, on the side facing the housing wall (1), by a second reinforcing ring (11) of hard-wearing material, in that the second reinforcing ring (11) at least partially closely touches the housing wall (1) under radial prestress during the intended use, and in that the sheathing (10), by virtue of the production process, protrudes beyond the second reinforcing ring (11) in the radial direction outside the axial partial region.

2. A sealing arrangement according to claim 1, characterized in that the second reinforcing ring (11) and the sheathing (10) are adhesively bonded.

3. A sealing arrangement according to either of claims 1 and 2, characterized in that the second reinforcing ring (11) has an L-shaped profile and can be placed, with a flange (12) projecting in the radial direction, against a radial surface (13) of the housing wall (1).

4. A sealing arrangement according to claim 3, characterized in that the flange (12) is surrounded by elastomer at least in the region of its radially outwardly projecting boundary and has, on the side facing the housing wall (1), an axial sealing lip (14) which projects in the axial direction.

5. A sealing arrangement according to any of claims 1 to 4, characterized in that the second reinforcing ring (11) concentrically surrounds the first reinforcing ring (6).

6. A sealing arrangement according to any of claims 1 to 5, characterized in that a sheathing (10) with a layer thickness of 0.7 to 3 mm is arranged in the radial direction between the first and the second reinforcing ring (6, 11).

7. A sealing arrangement according to any of claims 1 to 6, characterized in that the second limb (7) of the first reinforcing ring (6) has a bent profile, in that the partial region (17) of the second limb (7), which is relatively larger in its diameter, partially encloses the outer ring (8), and in that the partial region (18) of the second limb (7), which is relatively smaller in its diameter, is arranged within the second reinforcing ring (11) with the sheathing (10) being fitted radially in between.

8. A sealing arrangement according to any of claims 1 to 7, characterized in that the sheathing (10) has at least two circumferential sealing ribs (15, 16) on the side facing the housing wall (1), and in that the sealing ribs (15, 16) are adjacent to one another with axial spacing.

9. A sealing arrangement according to claim 1, characterized in that the shaft (2) is surrounded in a sealing manner by an auxiliary sealing lip (19) which is arranged in the axial direction adjacent to the sealing lip (4) on the side remote from the medium (20) to be sealed off, and in that the auxiliary sealing lip (19), the sealing lip (4) and the shaft (2) delimit a hollow space (21).

10. A sealing arrangement according to claim 9, characterized in that the hollow space (21) is filled with grease during the intended use.

## Revendications

1. Agencement d'étanchéité destiné à l'étanchéification d'un arbre (2) traversant une paroi de boîtier (1), comprenant une bague d'étanchéité radiale (3), qui entoure de façon étanche et périphérique sous précontrainte radiale l'arbre (2) à rendre étanche par au moins une lèvre d'étanchéité (4 ; 19) en matière élastomère, la lèvre d'étanchéité (4 ; 19) étant fixée à une première branche (5), se dirigeant radialement vers l'intérieur, d'une première bague de renforcement (6) essentiellement en forme de L, dans lequel la deuxième branche (7) s'étend dans le sens axial et recouvre au moins partiellement et touche de façon adjacente la bague extérieure (8) d'un palier à roulement (9) et dans lequel la deuxième branche (7) est revêtue de matière élastomère au moins sur le côté orienté vers la paroi de boîtier (1) et peut être fixée sous précontrainte radiale dans la paroi de boîtier (1), caractérisé en ce que le revêtement (10) est entouré d'une deuxième bague de renforcement (11) en matière dure tenace sur le côté orienté vers la paroi de boîtier (1) dans une zone partielle axiale, en ce que la deuxième bague de renforcement (11) touche de façon adjacente sous précontrainte radiale au moins partiellement la paroi de boîtier (1) pendant l'utilisation en conformité avec sa spécification et en ce que le revêtement (10) dépasse dans le sens radial, de par sa fabrication, la deuxième bague de renforcement (11) à l'extérieur de la zone partielle axiale.

2. Agencement d'étanchéité selon la revendication 1, caractérisé en ce que la deuxième bague de renforcement (11) et le revêtement (10) sont reliés de façon adhésive.

3. Agencement d'étanchéité selon l'une des revendications 1 à 2, caractérisé en ce que la deuxième bague de renforcement (11) présente un profil en forme de L et peut être mise contre une surface radiale (13) de la paroi de boîtier (1) par une bride (12) faisant saillie dans le sens radial.

4. Agencement d'étanchéité selon la revendication 3, caractérisé en ce que la bride (12) est entourée d'élastomère au moins dans la zone de sa limitation faisant saillie radialement vers l'extérieur et présente sur le côté orienté vers la paroi de boîtier (1) une lèvre d'étanchéité axiale (14) faisant saillie dans le sens axial.

5. Agencement d'étanchéité selon l'une des revendications 1 à 4, caractérisé en ce que la deuxième bague de renforcement (11) entoure concentriquement la première bague de renforcement (6).

6. Agencement d'étanchéité selon l'une des revendications 1 à 5, caractérisé en ce qu'un revêtement (10) d'une épaisseur de couche de 0,7 à 3 mm est disposé dans le sens radial entre la première et la deuxième bague de renforcement (6, 11).

7. Agencement d'étanchéité selon l'une des revendications 1 à 6, caractérisé en ce que la deuxième branche (7) de la première bague de renforcement (6) présente un profil contre-coudé, en ce que la zone partielle (17), relativement élargie en diamètre, de la deuxième branche (7) enveloppe partiellement la bague extérieure (8) et en ce que la zone partielle (18), relativement réduite en diamètre, de la deuxième branche (7) est disposée à l'intérieur de la deuxième bague de renforcement avec insertion radiale du revêtement (10).

8. Agencement d'étanchéité selon l'une des revendications 1 à 7, caractérisé en ce que le revêtement (10) présente sur le côté orienté vers la paroi du boîtier (1) au moins deux nervures d'étanchéité circulaires (15, 16) et en ce que les nervures d'étanchéité (15, 16) sont contiguës l'une à l'autre avec un écartement axial.

9. Agencement d'étanchéité selon la revendication 1, caractérisé en ce que l'arbre (2) est entouré de façon étanche d'une lèvre d'étanchéité auxiliaire (19), qui est associée de façon contiguë dans le sens axial à la lèvre d'étanchéité (4) sur le côté opposé au milieu (20) à rendre étanche et en ce que la lèvre d'étanchéité auxiliaire (19), la lèvre d'étanchéité (4) et l'arbre (2) limitent un espace creux (21).

10. Agencement d'étanchéité selon la revendication 9, caractérisé en ce que l'espace creux (21) est rempli de graisse pendant l'utilisation en conformité avec sa spécification.
